# EUROPEAN PATENT APPLICATION

(11) **EP 2 267 867 A2**
(43) Date of publication of application: **29.12.2010**
(21) Application number: 10167049.5
(22) Date of filing: 23.06.2010
(51) Int. Cl.: H02J 13/00

(54) **Method and apparatus for monitoring and selectively controlling a load in a power system**

(30) Priority: 25.06.2009 US 491488
(71) Applicant: General Electric Company, Schenectady, NY 12345 (US)
(72) Inventor: Thomson, Matthew B., Atlanta, GA 30339 (US)
(74) Representative: Gray, Thomas

(57) **Abstract**

A monitoring and control device (26) for a power system (10), the power system including a plurality of electrical loads and a control unit is provided. The monitoring and control device (26) includes a load monitoring module (56) configured to determine an amount of electrical power transmitted to at least one of the plurality of electrical loads, the load monitoring module further configured to transmit a value representing the determined quantity of electrical power to the power system, and a load control module (58) configured to control an amount of electrical power transmitted to the at least one of the plurality of electrical loads. The load control module is further configured to receive a power control command from the power system, and transmit a power control acknowledgement to the power system.

## Description

### BACKGROUND OF THE INVENTION

The present application relates generally to power systems and, more particularly, to a method and apparatus for monitoring and controlling a load in a power system.

Demand for electricity by customers may exceed available supply from power utility companies. Certain events may cause energy demand to peak at a level that is above a utility's ability to provide electricity to every customer. Accordingly, "blackouts" or "brownouts" may be imposed upon customers. Power utilities generally do not have the ability to selectively determine which loads within a customer's premises will be disabled due to a blackout or brownout. Rather, during said power conditions, a customer's entire premises are typically subjected to a reduction or complete loss of power when a blackout or brownout occurs.

To combat this largely indiscriminate loss of power, some power utilities utilize socalled "smart grid" or Advanced Metering Infrastructure (AMI) power networks. Using an AMI network, a power utility may communicate with individual loads within a customer's premises and selectively reduce power consumption during peak usage periods. As such, a power utility may reduce power to low priority loads, while maintaining power to high priority loads.

To reap the benefits of AMI networks, a power utility must be able to communicate with appliances and other loads within a customer's premises. Specifically, it is desirable or necessary for a utility to communicate power control messages to individual appliances, and to monitor the compliance of the appliances in responding to such control messages. The prevalence of "non-intelligent," or legacy, appliances presents an impediment to the successful implementation of an AMI network. Legacy appliances often do not have the capability of receiving or responding to power control messages sent by a power utility. Moreover, it is desirable or necessary for a utility to monitor compliance with power control messages sent to loads within a customer's premises. If a message is sent to a load, the utility often is unable to verify that the load received and/or complied with the message.

### BRIEF DESCRIPTION OF THE INVENTION

In one embodiment, a monitoring and control device is provided for a power system including a plurality of electrical loads and a control unit. The monitoring and control device includes a load monitoring module configured to determine an amount of electrical power transmitted to at least one of the plurality of electrical loads. The load monitoring module is further configured to transmit a value representing the determined quantity of electrical power to the power system. The monitoring and control device also includes a load control module configured to control an amount of electrical power transmitted to the at least one of the plurality of electrical loads. The load control module is further configured to receive a power control command from the power system and to transmit a power control acknowledgement to the power system.

In another embodiment, a power system is provided that includes a plurality of electrical loads, a control unit, and a monitoring and control device. The monitoring and control device includes a load monitoring module configured to determine an amount of electrical power transmitted to at least one of the plurality of electrical loads. The load monitoring module is further configured to transmit a value representing the determined quantity of electrical power to the power system. The monitoring and control device also includes a load control module configured to control an amount of electrical power transmitted to the at least one of the plurality of electrical loads. The load control module is further configured to receive a power control command from the power system and to transmit a power control acknowledgement to the power system.

### BRIEF DESCRIPTION OF THE DRAWINGS

There follows a detailed description of embodiments of the invention by way of example only with reference to the accompanying drawings, in which:
Figure 1 is a block diagram of an exemplary premises power system; and
Figure 2 is a block diagram of an exemplary monitoring and control device that may be used with the premises power system shown in Figure 1.

### DETAILED DESCRIPTION OF THE INVENTION

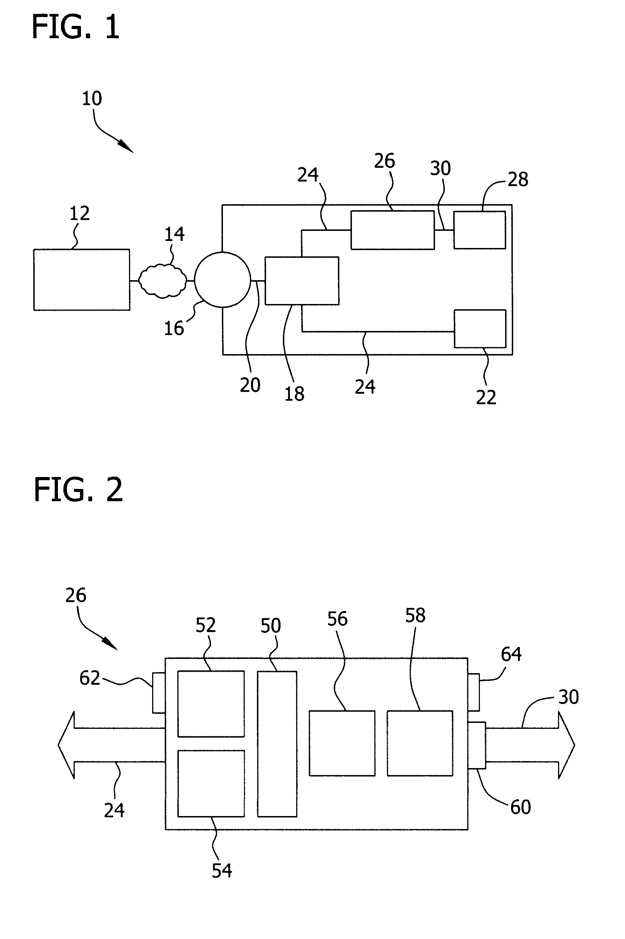

Figure 1 illustrates an exemplary premises power system 10. In the exemplary embodiment, system 10 includes at least one electric meter 16, a remote control unit 18, and a plurality of legacy appliances 28 and/or smart appliances 22. As used herein, the term "smart appliance" refers to any appliance that includes the capability of remotely communicating with, or being remotely controlled by, another device. As used herein, the term "legacy appliance" refers to an appliance that does not include the capability of remote communication or remote control.

In the exemplary embodiment, meter 16 is coupled to remote unit 18 via a meter data link 20. Remote control unit 18 is coupled to smart appliance 22 via a remote control data link 24. Remote control data link 24 may be a wireless or wired communication connection. Remote control unit 18 is also coupled to a monitoring and control device 26 via remote control data link 24. Legacy appliance 28 is coupled to monitoring and control device 26 via power line 30. Utility 12 is coupled to system 10 via a power network 14. In the exemplary embodiment, utility 12 is coupled to meter 16 within system 10 via network 14.

Utility 12 is coupled to network 14. To facilitate efficient operation, it is desired that utility 12 be informed of the power usage of premises power systems, such as system 10, and that utility 12 have the capability to request premise power systems, such as system 10, to enable a desired amount of power usage to be deferred during peak power operating conditions. Accordingly, in the exemplary embodiment, utility 12 transmits power control commands to system 10. It is also desirable for utility 12 to verify that the power control commands were properly received, and/or implemented by each premises power system 10. As such, in the exemplary embodiment, utility 12 receives power control acknowledgements and power control responses from system 10.

Network 14 is coupled to utility 12 and system 10. In the exemplary embodiment, network 14 is coupled to a meter 16 within system 10. In an alternative embodiment, network 14 is coupled to remote control unit 18. In the exemplary embodiment, network 14 conveys power control commands from utility 12 to system 10, and conveys power control acknowledgements and power control responses from system 10 to utility 12. As such, in the exemplary embodiment, network 14 is an Advanced Metering Infrastructure (AMI) network.

Meter 16 is coupled to utility 12 via network 14. Meter is also coupled to remote control unit 18 via meter data link 20. In the exemplary embodiment, meter 16 transmits power control commands from utility 12 to remote control unit 18, and transmits power control acknowledgements and power control responses from remote control unit 18 to utility 12.

In the exemplary embodiment, remote control unit 18 is coupled to meter 16 via meter data link 20, to smart appliance 22 via remote control data link 24. Moreover, remote control unit 18 is also coupled to monitoring and control device 26 via remote control data link 24. Remote control unit 18 receives power control commands from utility 12 via network 14 and meter 16, and transmits the power control commands to monitoring and control device 26 and/or to smart appliance 22. Remote control unit 18 also receives power control acknowledgements and power control responses from monitoring and control device 26 and/or smart appliance 22, and transmits the power control acknowledgements and power control responses to utility via meter 16 and network 14. In an alternative embodiment, remote control unit 18 does not communicate with utility 12 through meter 16, but rather remote control unit 18 bypasses meter 16 and is coupled to network 14.

In the exemplary embodiment, monitoring and control device 26 is coupled to remote control unit 18 and legacy appliance 28. Monitoring and control device 26 receives power control commands from utility 12 via network 14, meter 16, and remote control unit 18. Monitoring and control device 26 also transmits power control acknowledgements and power control responses to utility 12 via remote control unit 18, meter 16, and network 14. Monitoring and control device 26 is also configured as is described in more detail below.

Figure 2 illustrates an exemplary monitoring and control device 26 that may be used with system 10 (shown in Figure 1). In the exemplary embodiment, monitoring and control device 26 includes a communication module 50, a load monitoring module 56, a load control module 58, a wireless data transceiver 54, and a power port 60. In an alternative embodiment, monitoring and control device 26 includes a wired data transceiver 52 and a data port 62, rather than wireless data transceiver 54. In another embodiment, monitoring and control device 26 includes wired data transceiver 52, data port 62, and wireless data transceiver 54. In yet another embodiment, monitoring and control device 26 includes an appliance data port 64.

Communication module 50 communicates with remote control unit 18. In the exemplary embodiment, communication module 50 uses wireless data transceiver 54 to communicate with remote control unit 18. Wireless data transceiver 54 enables communication with remote control unit 18 using any of a variety of mechanisms, including, but not limited to, Zigbee, Bluetooth, and IEEE 802.11 protocols, or any other wireless data transport mechanism that enables monitoring and control device 26 to function as described herein. In an alternative embodiment, communication module 50 uses wired data transceiver 52 to communicate with remote control unit 18. In such an embodiment, remote control data link 24 includes a cable (not shown) coupled to data port 62. Wired data transceiver 52 may communicate with remote control unit 18 via remote control data link 24 using any of a variety of mechanisms, including, but not limited to, Ethernet, broadband over power lines (BPL), or any other wired data transport mechanism that enables monitoring and control device 26 to function as described herein. Communication module 50 facilitates transmitting one or more power control acknowledgements, and one or more power control responses to remote control unit 18. In another embodiment, communication module 50 is incorporated into at least one of wireless data transceiver 54, wired data transceiver 52, load monitoring module 56, and/or load control module 58.

Load monitoring module 56 is coupled to legacy appliance 28 via power port 60 and power line 30. Load monitoring module 56 is programmed to determine a quantity of electrical power transmitted to legacy appliance 28. In one embodiment, load monitoring module 56 includes a voltmeter, an ammeter, and/or a watt meter (not shown). In the exemplary embodiment, load monitoring module 56 includes each of a voltmeter, an ammeter, and a wattmeter. Load monitoring module 56 uses one or all of the aforementioned meters to determine a quantity of electrical power transmitted to legacy appliance 28 at a specific time, or over a specified elapsed period of time. Load monitoring module 56 stores one or more values representing the determined quantity of electrical power in an internal memory unit (not shown) for later retrieval. As such, in the exemplary embodiment, load monitoring module 56 may determine power, voltage, and current transmitted to legacy appliance 28 at a specific time, and may also determine historical power usage of appliance 28. Load monitoring module 56 is configured to transmit one or more power control responses that may include the values representing the determined quantity of electrical power and/or the values representing the historical power usage of legacy appliance 28 to remote control unit 18. Load monitoring module uses communication module 50, wired data transceiver 52, and/or wireless data transceiver 54 to facilitate transmitting the power usage value or values to remote control unit 18.

Load control module 58 is electrically coupled to legacy appliance 28 via power port 60 and power line 30. Load control module 58 controls the electrical power transmitted to legacy appliance 28, and receives a power control command from remote control unit 18. Moreover, load control module 58 also transmits a power control acknowledgement to remote control unit 18. In the exemplary embodiment, communication module 50 receives the power control command from remote control unit 18 and transmits the power control command to load control module 58. Communication module 50 also transmits the power control acknowledgement from load control module 58 to remote control unit 18. In the exemplary embodiment, load control module 58 includes a power relay (not shown) that enables load control module 58 to provide a variable amount of power to legacy appliance 28. As used herein, the term "power relay" includes one or more power relays known in the art, and also includes one or more silicon controlled rectifiers, transistors, and any other circuit that provides discrete or variable output control of voltage and/or current to a load.

During operation, utility 12 transmits a power control command to meter 16 via network 14. Meter 16 transmits the power control command to remote control unit 18 via meter data link 20. Remote control unit 18 receives the command and transmits the command to monitoring and control device 26 via remote control data link 24. Upon receipt of the command, monitoring and control device 26 transmits a power control acknowledgement to remote control unit 18, and remote control unit 18 transmits the acknowledgement to utility 12 via meter 16 and network 14. After the power control acknowledgement is transmitted to utility 12, monitoring and control device 26 analyzes the power control command. For example, the power control command may include a request for information about legacy appliance 28, a request for an amount of power currently being used by appliance 28, or a request for an amount of power used over a period of time. The power control command may include a command for legacy appliance 28 to reduce power consumption by a specified amount, to de-energize appliance 28, to fully energize appliance 28, to partially energize appliance 28 to a desired power level, or to resume normal operation. The above power control commands are non-exhaustive examples only, and different or additional commands may be transmitted by utility 12.

After analyzing the power control command, monitoring and control device 26 performs an action based on, or identified by, the command. If the power control command includes a request for information regarding power usage of legacy appliance 28, monitoring and control device 26 measures an amount of power transmitted to appliance 28, and/or retrieves historical power consumption data from an internal memory (not shown). More specifically, load monitoring module 56 measures the power transmitted to legacy appliance 28 using a wattmeter (not shown), or using a combination of a voltmeter and an ammeter (both not shown). Alternatively, load monitoring module 56 retrieves a value or values of historical data from internal memory representing the prior power usage of legacy appliance 28. After load monitoring module 56 has retrieved the requested data based on or identified by the received power control command, load monitoring module 56 transmits the data to remote control unit 18 in the form of a power control response.

If the power control command includes a command to modify the power usage of legacy appliance 28, monitoring and control device 26 adjusts the electrical power transmitted to appliance 28 based on the command. More specifically, if utility 12 transmits a power control command for legacy appliance 28 to de-energize, load control module 58 switches off the power relay. As legacy appliance 28 is coupled to load control module 58 via power line 30, switching off power relay de-energizes power line 30, thus powering off appliance 28. If utility 12 transmits a power control command for legacy appliance 28 to reduce power consumption by a specified amount, load control module 58 reduces the output voltage and/or current of the power relay, thus reducing power transmitted to appliance 28. If utility 12 transmits a power control command for legacy appliance 28 to fully energize, load control module 58 switches on power relay to full output power, thus energizing appliance 28 to full power. If utility 12 transmits a power control command for legacy appliance 28 to operate with a reduced power setting, load control module 58 switches on power relay with reduced output voltage and/or current, thus energizing appliance 28 at a desired power setting. If utility 12 transmits a power control command for legacy appliance 28 to resume normal operation, load control module 58 switches power relay to full output power, thus returning appliance 28 to full power operations.

After load control module implements the power control command, monitoring and control device 26 transmits a power control response to utility 12 via remote control unit 18, meter 16, and network 14. Specifically, monitoring and control device 26 transmits a power control response to utility 12 that includes a value representing a correct response of legacy appliance 28 to the power control command. In the exemplary embodiment, load monitoring module 56 determines the amount of power used by legacy appliance 28 after the power control command has been implemented, as described above, and includes a value representing the determined amount of power in the power control response. For example, if the power control command directs legacy appliance 28 to be turned off, and if the command is successfully implemented on appliance 28, then load monitoring module 56 may measure a power usage of approximately zero watts by appliance 28. Load monitoring module 56 transmits a power command response that includes a value representing substantially zero watts to utility 12. By comparing the power control response to an expected response value, utility 12 can verify that the power control command was successfully implemented on legacy appliance 28. In an alternative embodiment, load monitoring module 56 transmits a power control response to utility 12 that includes a value representing a successful completion of, or alternatively, a failure to implement, the power control command, rather than transmitting the determined amount of power.

In another embodiment, monitoring and control device 26 includes a baseline power usage model for legacy appliance 28. The baseline power usage model may be programmed into monitoring and control device 26, and/or monitoring and control device 26 may derive the model by monitoring the power usage of legacy appliance 28 over time. After implementing the power control command, monitoring and control device 26 compares the amount of power used by legacy appliance 28 to the baseline power usage model of appliance 28. If the amount of power used by legacy appliance 28 corresponds to a correct implementation of the power control command in view of the baseline power usage model, then monitoring and control device 26 transmits a power control response that includes a value representing a successful completion of the power control command to utility 12. For example, if utility 12 transmits a power control command for legacy appliance 28 to reduce power by 50%, monitoring and control device 26 implements the command as described above. Monitoring and control device 26 determines an amount of power supplied to legacy appliance 28, and compares that amount to the baseline power usage model to verify that power has been reduced by 50%. If power has been reduced as directed, monitoring and control device 26 transmits a power control response that includes a successful completion value and/or a value representing the reduced power usage of legacy appliance 28 back to utility 12. If power has not been reduced by the specified amount, monitoring and control device 26 transmits a power control response to utility 12 that includes a failure value and/or a value representing the current power usage of legacy appliance 28 back to utility 12.

In an alternative embodiment, utility 12 communicates with remote control unit 18 directly via network 14 rather than via meter 16. In such an embodiment, system 10 operates with utility 12 and network 14 in the same manner as above, with the exception that communication between system 10 and utility 12 is not routed through meter 16. Rather, utility 12 transmits power control commands via network 14 to remote control unit 18. Remote control unit 18 responds to the power control commands by transmitting power control acknowledgements and power control responses to utility 12 via network 14.

In another embodiment, utility 12 communicates directly with monitoring and control device 26, rather than via meter 16 or remote control unit 18. In such embodiment, system 10 operates with utility 12 and network 14 in the same manner as above, with the exception that communication between system 10 and utility 12 is not routed through meter 16 or remote control unit 18. Rather, utility 12 transmits power control commands via network 14 to monitoring and control device 26. Monitoring and control device 26 responds to the power control commands by transmitting power control acknowledgements and power control responses to utility 12 via network 14.

In an alternative embodiment, monitoring and control device 26 is coupled to a smart appliance 22, via remote control data link 24, rather than to a legacy appliance 28. In such embodiment, utility 12 and/or remote control unit 18 may implement more advanced power control commands using monitoring and control device 26. For example, power control commands may be implemented that include a request to adjust a thermostat by a specified number of degrees, to delay an oven cleaning for a specified amount of time, to delay a freezer defrost cycle for a specified time, and/or to adjust a temperature of a refrigerator by a specified number of degrees. In such embodiment, monitoring and control device 26 is coupled to, and transmits power control commands to, smart appliance 22 via appliance data port 64 and remote control data link 24.

Monitoring and control device 26 may transmit more advanced power control responses to utility 12 in response to the power control commands. For example, monitoring and control device 26 may transmit a power control response that includes one or more values representing the specific action undertaken by monitoring and control device 26 and/or smart appliance 22 to implement the power control command. Monitoring and control device 26 may communicate with smart appliance 22 via remote control data link 24 and appliance data port 64 using any of a variety of mechanisms, including, but not limited to, Ethernet, broadband over power lines (BPL), or any other wired data transport mechanism that enables monitoring and control device 26 to function as described herein. In another embodiment, monitoring and control device 26 is coupled to smart appliance 22 via power port 60 and power line 30, and transmits power control commands to smart appliance 22 using BPL or another power line data transfer protocol.

In yet another embodiment, monitoring and control device 26 is coupled to a plurality of appliances, including one or more legacy appliances 28 and/or one or more smart appliances 22. In such embodiment, monitoring and control device 26 includes a plurality of power ports 60 and/or appliance data ports 64 as desired. In the exemplary embodiment, monitoring and control device 26 is configured to connect to power outlets in the United States with a standard voltage of approximately 120VAC and at a frequency of approximately 60Hz. In an alternative embodiment, monitoring and control device 26 is configured to connect to power outlets in other countries with a standard voltage of approximately 220-240VAC and at a frequency of approximately 50Hz, or any other voltage and frequency as needed.

The above-described method and apparatus facilitate providing an efficient and cost-effective device for monitoring and controlling a load in a power system. The method and apparatus facilitate enabling legacy appliances to connect to an intelligent power grid and enabling smart appliances to more fully integrate into an intelligent power grid. The embodiments facilitate receiving and responding to power control messages sent from a power utility company. Moreover, the embodiments facilitate implementing the power control messages on legacy and smart appliances, and monitoring the legacy and smart appliances' responses to the power control commands. As such, the above-described embodiments facilitate providing more efficient premises load control by power utility companies, and enable utilities to control individual appliances within a customer's premises. As a result, utilities may use the above-described embodiments to facilitate reducing power consumption by non-critical loads within a customer's premises, maintaining power to critical loads, and more efficiently managing a power grid. By implementing the above-described embodiments, customers may also reduce power consumption by loads within their premises, and reduce their power bills.

Exemplary embodiments of a method and apparatus for monitoring and controlling a load in a power system are described above in detail. The method and apparatus are not limited to the specific embodiments described herein, but rather, components of the apparatus and/or steps of the method may be utilized independently and separately from other components and/or steps described herein. For example, the monitoring and control device may also be used in combination with other power systems and methods, and is not limited to practice with only the power system as described herein. Rather, the above-described embodiments can be implemented and utilized in connection with many other power system applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A monitoring and control device (26) for a power system (10), the power system including a plurality of electrical loads and a control unit, said monitoring and control device comprising:
a load monitoring module (56) configured to determine an amount of electrical power transmitted to at least one of the plurality of electrical loads, said load monitoring module further configured to transmit a value representing the determined quantity of electrical power to the power system; and
a load control module (58) configured to control an amount of electrical power transmitted to the at least one of the plurality of electrical loads, said load control module further configured to:
receive a power control command from the power system; and
transmit a power control acknowledgement to the power system.

2. A monitoring and control device (26) in accordance with claim 1, wherein said monitoring and control device further comprises a communication module (50) configured to be communicatively coupled to the control unit (18).

3. A monitoring and control device (26) in accordance with claim 2, wherein said communication module (50) communicates with the control unit (18) via a wireless data transceiver (54).

4. A monitoring and control device (26) in accordance with claim 2, wherein said communication module (50) communicates with the control unit (18) via a wired data transceiver (52).

5. A monitoring and control device (26) in accordance with any of the preceding claims, wherein said monitoring and control device comprises a power connection input configured to electrically couple to a power connection output of the at least one of the plurality of electrical loads.

6. A monitoring and control device (26) in accordance with any of the preceding claim, wherein said load monitoring module (56) comprises at least one of a voltmeter, an ammeter, and a wattmeter.

7. A monitoring and control device (26) in accordance with any of the preceding claims, wherein said load control module (58) provides a variable voltage and a variable current to the at least one of the plurality of electrical loads.

8. A monitoring and control device (26) in accordance with any of the preceding claims, wherein the at least one of the plurality of electrical loads comprises a legacy appliance (28).

9. A monitoring and control device (26) in accordance with any of the preceding claims, wherein said load monitoring module (56) configured to determine a historical amount of electrical power transmitted to the at least one of the plurality of electrical loads.

10. A monitoring and control device (26) in accordance with any of the preceding claims, wherein said load control module (58) further configured to implement the power control command on the at least one of the plurality of electrical loads.

11. A power system comprising:
a plurality of electrical loads;
a control unit; and
a monitoring and control device in accordance with any of the preceding claims.

12. A power system in accordance with claim 11, wherein said monitoring and control device further comprises a communication module configured to be communicatively coupled to said control unit.

13. A power system in accordance with claim 12, wherein said communication module communicates with said control unit via a wireless data transceiver.

14. A power system in accordance with claim 12, wherein said communication module communicates with said control unit via a wired data transceiver.

15. A power system in accordance with claim 11, wherein said monitoring and control device comprises a power connection input configured to electrically couple to a power connection output of said at least one of said plurality of electrical loads.
